# EUROPÄISCHE PATENTANMELDUNG

(11) **EP 4 598 050 A1**
(43) Veröffentlichungstag der Anmeldung: **06.08.2025**
(21) Anmeldenummer: 25154331.0
(22) Anmeldetag: 28.01.2025
(51) Int. Cl.: H04R 1/02, A45F 5/00

(54) **SCHUTZHÜLLE, HÖRBOX UND BEDIENVERFAHREN FÜR EINE HÖRBOX**

(30) Priorität: 30.01.2024 DE 102024102646
(71) Anmelder: Tiger Media International GmbH, 20249 Hamburg (DE)
(72) Erfinder: Weitendorf, Till, 20144 Hamburg (DE)
(74) Vertreter: LBP Lemcke, Brommer & Partner Patentanwälte mbB

(57) **Zusammenfassung**

Vorgeschlagen wird eine Schutzhülle (1) bei einer Hörbox (2), die die Hörbox bevorzugt zumindest teilweise eng anliegend und schützend umgibt und die einen NFC-Chip (4) enthält, der eine Kennung besitzt, die durch eine NFC-Leseeinheit der Hörbox (2) auslesbar ist, wobei die NFC-Leseeinheit mit einer Steuerungseinheit der Hörbox (2) wirkverbunden ist, um einen Betrieb der Hörbox (2), insbesondere die Auswahl von Medieninhalten und deren Wiedergabe, in Abhängigkeit von der Kennung zu beeinflussen.

## Beschreibung

Die Erfindung betrifft eine Schutzhülle, z.B. aus Silikon oder einem ähnlichen für Kinder unbedenklichen Material, auf bzw. bei einer Hörbox, durch die die Hörbox in ihrem Betrieb und/oder Erscheinungsbild anpassbar ist.

Die Erfindung betrifft auch eine Hörbox und ein Verfahren zum Bedienen einer Hörbox.

Eine Hörbox (kurz: "Box") ist ein technisches Gerät, das eine (drahtlose) Internet-Verbindung herstellen kann, um digitale Medieninhalte, insbesondere gesprochene Geschichten, Hörbücher, Hörspiele oder Musik, von einem Datenserver herunterzuladen und per Lautsprecher oder Kopfhörer auszugeben. Die bekannte tigerbox aus dem Hause der Anmelderin stellt ein solches Gerät dar.

Ein solches Gerät ist bei entsprechender Ausgestaltung zur Benutzung durch (kleine) Kinder bestimmt, die die Box gerne nach Art eines Spielzeugs oder Kuscheltiers personifizieren. Dieser Aspekt soll durch die vorliegende Erfindung genutzt oder sogar noch verstärkt werden.

Gerade bei kleinen Kindern kann die Box durch Fallenlassen beschädigt werden, was es vorzugsweise zu verhindern gilt.

Außerdem soll vermieden werden, dass die verschiedenen Boxen unterschiedlicher Kinder miteinander verwechselt werden.

Zu diesem Zweck wird vorgeschlagen, die Box mit einer Schutzhülle, also einer Art Verkleidung, zu versehen, wie sie in den Ansprüchen näher definiert ist. Die Schutzhülle umgibt die Box bevorzugt nicht vollständig, so dass insbesondere ein Display (Touchscreen) und der Lautsprecher (zumindest größtenteils) frei bleiben.

Eine erfindungsgemäße Schutzhülle bei einer Hörbox, die die Hörbox bevorzugt zumindest teilweise eng anliegend und schützend umgibt, enthält einen NFC-Chip, der eine Kennung besitzt, die durch eine NFC-Leseeinheit der Hörbox auslesbar ist. Die NFC-Leseeinheit ist mit einer Steuerungseinheit der Hörbox wirkverbunden, um einen Betrieb der Hörbox, insbesondere die Auswahl von Medieninhalten und deren Wiedergabe, in Abhängigkeit von der Kennung zu beeinflussen.

Die Schutzhülle kann so dafür sorgen, dass der Betrieb der Hörbox, insbesondere was die Auswahl von Medieninhalten und deren Wiedergabe betrifft, in Abhängigkeit von einem Erscheinungsbild der Schutzhülle, insbesondere im Hinblick auf eine Farbe oder eine sonstige erkennbare Beschaffenheit der Schutzhülle, an die Schutzhülle angepasst oder anpassbar ist.

Außerdem schützt die Schutzhülle die Box vor Schadeinwirkungen und sorgt für eine Unterscheidbarkeit bei gleichen Boxen.

Vorzugsweise hat die Schutzhülle eine Tiergestalt mit einer vorherrschenden Farbe, z.B. ein oranger Tiger, so dass dann bevorzugt eine vorherrschende Anzeigefarbe im Display der Box Orange ist und die Medieninhalte eine entsprechende (inhaltliche) Ausrichtung erfahren, z.B. durch Tigergebrüll oder das Auftreten eines Tiger-Charakters.

Insbesondere kann mittels der Schutzhülle in Abhängigkeit von der Kennung eine Anzeige auf einem Display der Hörbox veränderbar sein, worauf schon hingewiesen wurde. Die Veränderung kann rein farblich aber auch inhaltlich sein (Darstellen eines Tigergesichts oder dgl.).

Höchst vorzugsweise kann die NFC-Leseeinheit der Hörbox auch noch zum Auslesen einer weiteren Kennung von einem weiteren NFC-Chip, insbesondere von einer NFC-Karte, ausgebildet sein, wie dies von der tigerbox grundsätzlich bekannt ist. Die Steuerungseinheit der Hörbox ist entsprechend dazu ausgebildet, den Betrieb der Hörbox, insbesondere die Auswahl von Medieninhalten und deren Wiedergabe, in Abhängigkeit von einer Kombination der Kennung und der weiteren Kennung zu steuern.

In diesem Kontext heißt "Kombination", dass beide Kennungen nur gemeinsam eine bestimmte Betriebsvariante der Box auslösen: z.B. bewirkt eine Tiger-Schutzhülle mit entsprechender Kennung zusammen mit einer Uhrzeit-Karte (mi entsprechender weiterer Kennung), dass ein Tiger die Uhr erklärt oder die Uhrzeit "vorliest".

Die Hörbox umfasst erfindungsgemäß eine Schutzhülle, wie vorstehend detailliert beschrieben.

Die Hörbox umfasst bevorzugt außerdem ein Display, wie vorstehend ebenfalls detailliert beschrieben.

Die Hörbox umfasst bevorzugt weiterhin einen Kennungsträger in Form eines NFC-Chips, insbesondere als Teil einer NFC-Karte, die in einen Schlitz an der Box eingesteckt werden kann.

Ein erfindungsgemäßes Verfahren zum Bedienen einer Hörbox beinhaltet:
das zumindest teilweise Umhüllen der Hörbox mit der oben beschriebenen Schutzhülle;
das Auslesen der Kennung des NFC-Chips durch eine NFC-Leseeinheit der Hörbox, wobei die NFC-Leseeinheit mit einer Steuerungseinheit der Hörbox wirkverbunden ist; und
das Betreiben der Hörbox, insbesondere zum Auswählen und Wiedergeben von Medieninhalten, nach Maßgabe durch die Steuerungseinheit in Abhängigkeit von der Kennung.

Eine Ausgestaltung des Verfahrens sieht vor, dass der Betrieb der Hörbox, insbesondere die Auswahl von Medieninhalten und deren Wiedergabe, in Abhängigkeit von einem Erscheinungsbild der Schutzhülle, insbesondere im Hinblick auf eine Farbe oder eine sonstige erkennbare Beschaffenheit der Schutzhülle, an die Schutzhülle angepasst wird.

Eine andere Ausgestaltung des Verfahrens sieht vor, dass in Abhängigkeit von der Kennung eine Anzeige auf einem Display der Hörbox verändert wird.

Eine wieder andere Ausgestaltung des Verfahrens sieht vor, dass durch die NFC-Leseeinheit der Hörbox eine weitere Kennung von einem weiteren NFC-Chip, insbesondere von einer NFC-Karte, ausgelesen wird, insbesondere mittels der NFC-Leseeinheit. Dann wird durch die Steuerungseinheit der Hörbox der Betrieb der Hörbox, insbesondere die Auswahl von Medieninhalten und deren Wiedergabe, in Abhängigkeit von einer Kombination der Kennung und der weiteren Kennung gesteuert.

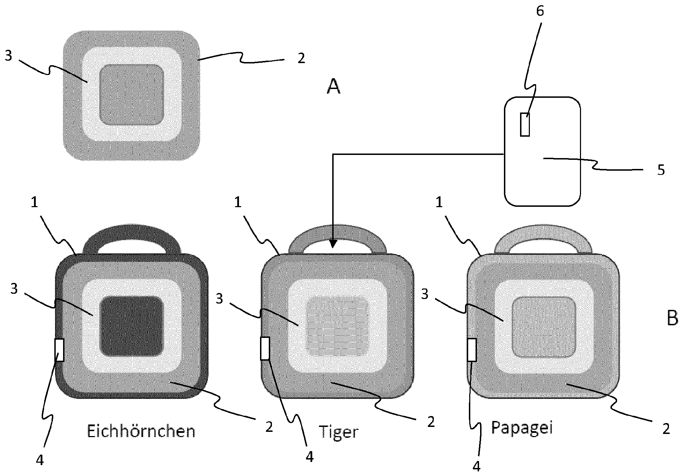

Die Figur zeigt in zwei (Teil-) Bildern A, B eine nicht beschränkende mögliche Ausführungsform der Erfindung.

Bild A zeigt eine Hörbox 2 mit Display (leichtes grau) 3 und einem beliebigen neutralen Inhalt, hier z.B. mit einem Screensaver oder einem Hörbuch in der Anzeige.

Das Produkt in Bild A kann nun zum Schutz oder zur Verschönerung mit bestimmten Kleidern oder Schutzverpackungen, hier z.B. Schutzsleeves (Schutzhüllen) 1, umhüllt werden, wie in Bild B gezeigt ist. Die Sleeves 1 können z.B., ohne Beschränkung, Tieren entsprechen. Das rote Sleeve 1 (links) könnte z.B. ein Eichhörnchen sein, das orange Sleeve 1 (Mitte) ein Tiger, das gelbe Sleeve 1 (rechts) ein Papagei.

In die Sleeves 1 ist jeweils ein NFC-Chip 4 mit einer Kennung integriert, der dem System (also der Box 2 und ggf einem mit der Box 2 wirkverbundenen Server (nicht gezeigt)) ein Signal gibt, welches Tier im Display 3 erscheinen soll, wenn eine nicht gezeigte NFC-Leseeinheit der Box 2 die Kennung ausliest. Ist es z.B. die orange Tiger-Schutzhülle, so sieht man den Tiger. Die Box 2 bzw. der Server stellt die betreffenden Medieninhalte zur Verfügung.

Der Tiger kann nun mit dem Kind interagieren, wird u.a. von einer KI gesteuert und löst zusammen mit dem Kind "Probleme" des Alltags, informiert das Kind aber auch über die neuesten Geschichten, die auf der Box 2 bzw. dem Server verfügbar sind.

Die Box 2 kann in bekannter Weise mit anderen Kennungsträgern 5, z.B. Karten, zusammenwirken, die ebenfalls einen NFC-Chip 6 mit einer weiteren Kennung aufweisen.

Wird z.B. eine "Zahnputzkarte" 5 in die Box 2 eingesteckt oder anderweitig mit ihr zusammengeführt, so dass die NFC-Leseeinheit der Box 2 die Kennung des Chips 6 auslesen kann, wird der Tiger mit dem Kind zusammen die Zähne putzen und es mit Zahnputzsongs und Putzerklärungen schulen. Die von der Box 2 ausgegebenen Medieninhalte sind also auf eine Kombination der beiden Kennungen (Tigerhülle 1 + Zahnputzkarte 5) abgestimmt.

Ähnliches passiert, wenn man eine "Uhrzeitkarte" einsteckt. Man kann dann die Uhr auf dem Display 3 ablesen, der Tiger liest dem Kind die Uhrzeit aber auch vor bzw. erklärt, wie die Uhr funktioniert.

Auch "Newskarten" in Kooperation mit Fernseh- oder Kindersendern sind auf diese Weise realisierbar, oder die Box 2 kann mittels "Kontaktkarten" eine Kommunikation (über das Internet) mit Eltern etc. aufbauen. In jedem Fall wird dies dem Kind präsentiert von seinem "Tigerfreund", dem Papagei oder dem Eichhörnchen, je nach verwendeter Schutzhülle 1.

Alternativ kann man auch über ein Bedien-Menü der Box 2 den Tierfreund auswählen und zuweisen, wenn z.B. die NFC-Verbindung zwischen Box 2 und Schutzhülle 1 nicht gegeben ist oder nicht funktioniert.

## Patentansprüche

1. Schutzhülle (1) bei einer Hörbox (2), die die Hörbox bevorzugt zumindest teilweise eng anliegend und schützend umgibt und die einen NFC-Chip (4) enthält, der eine Kennung besitzt, die durch eine NFC-Leseeinheit der Hörbox (2) auslesbar ist, wobei die NFC-Leseeinheit mit einer Steuerungseinheit der Hörbox (2) wirkverbunden ist, um einen Betrieb der Hörbox (2), insbesondere die Auswahl von Medieninhalten und deren Wiedergabe, in Abhängigkeit von der Kennung zu beeinflussen.

2. Schutzhülle (1) nach Anspruch 1, bei der der Betrieb der Hörbox (2), insbesondere die Auswahl von Medieninhalten und deren Wiedergabe, in Abhängigkeit von einem Erscheinungsbild der Schutzhülle (1), insbesondere im Hinblick auf eine Farbe oder eine sonstige erkennbare Beschaffenheit der Schutzhülle (1), an die Schutzhülle angepasst oder anpassbar ist.

3. Schutzhülle (1) nach Anspruch 1 oder 2, bei der in Abhängigkeit von der Kennung eine Anzeige auf einem Display (3) der Hörbox (2) veränderbar ist.

4. Schutzhülle (1) nach einem der Ansprüche 1 bis 3, bei der die NFC-Leseeinheit der Hörbox (2) zum Auslesen einer weiteren Kennung von einem weiteren NFC-Chip (6), insbesondere von einer NFC-Karte, ausgebildet ist, wobei die Steuerungseinheit der Hörbox (2) dazu ausgebildet ist, den Betrieb der Hörbox (2), insbesondere die Auswahl von Medieninhalten und deren Wiedergabe, in Abhängigkeit von einer Kombination der Kennung und der weiteren Kennung zu steuern.

5. Hörbox (2) mit der Schutzhülle (1) nach einem der Ansprüche 1 bis 4.

6. Hörbox (2) nach Anspruch 5 mit einem Display (3).

7. Hörbox (2) nach Anspruch 5 oder 6 mit einem Kennungsträger in Form eines NFC-Chips (6), insbesondere als Teil einer NFC-Karte.

8. Verfahren zum Bedienen einer Hörbox (2), beinhaltend:
das zumindest teilweise Umhüllen der Hörbox (2) mit der Schutzhülle (1) nach einem der Ansprüche 1 bis 4;
Auslesen der Kennung des NFC-Chips (4) durch eine NFC-Leseeinheit der Hörbox (2),
wobei die NFC-Leseeinheit mit einer Steuerungseinheit der Hörbox (2) wirkverbunden ist;
Betreiben der Hörbox (2), insbesondere Auswählen und Wiedergeben von Medieninhalten, nach Maßgabe durch die Steuerungseinheit in Abhängigkeit von der Kennung.

9. Verfahren nach Anspruch 8, bei dem der Betrieb der Hörbox (2), insbesondere die Auswahl von Medieninhalten und deren Wiedergabe, in Abhängigkeit von einem Erscheinungsbild der Schutzhülle (1), insbesondere im Hinblick auf eine Farbe oder eine sonstige erkennbare Beschaffenheit der Schutzhülle (1), an die Schutzhülle angepasst wird.

10. Verfahren nach Anspruch 8 oder 9, bei dem in Abhängigkeit von der Kennung eine Anzeige auf einem Display (3) der Hörbox (2) verändert wird.

11. Verfahren nach einem der Ansprüche 8 bis 10, bei dem
durch die NFC-Leseeinheit der Hörbox (2) eine weitere Kennung von einem weiteren NFC-Chip (6), insbesondere von einer NFC-Karte, ausgelesen wird, insbesondere mittels der NFC-Leseeinheit;
wobei durch die Steuerungseinheit der Hörbox (2) der Betrieb der Hörbox (2), insbesondere die Auswahl von Medieninhalten und deren Wiedergabe, in Abhängigkeit von einer Kombination der Kennung und der weiteren Kennung gesteuert wird.
